Europäisches Patentamt

European Patent Office

Office européen des brevets

(19)

(11) Veröffentlichungsnummer: **0 212 146**
**A1**

(12) **EUROPÄISCHE PATENTANMELDUNG**

(21) Anmeldenummer: 86108713.8

(22) Anmeldetag: 26.06.86

(51) Int. Cl.⁴: **A01D 17/10** , B65G 17/42 ,
A01D 33/00

(30) Priorität: 16.08.85 DE 3529465

(43) Veröffentlichungstag der Anmeldung:
04.03.87 Patentblatt 87/10

(84) Benannte Vertragsstaaten:
AT BE CH DE FR GB IT LI NL SE

(71) Anmelder: **Franz Grimme**
**Landmaschinenfabrik GmbH & Co. KG.**
**Wiesenstrasse 10**
**D-2845 Damme(DE)**

(72) Erfinder: **Grimme, Franz**
**Alter Schulweg 11**
**D-2845 Damme/Dümmer(DE)**
Erfinder: **Brintrup, Hermann-Josef**
**Haferkamp 18**
**D-2845 Damme/Dümmer(DE)**
Erfinder: **Welp, Johannes**
**Steinfelder Strasse**
**D-2845 Damme/Dümmer(DE)**

(74) Vertreter: **Busse & Busse Patentanwälte**
**Postfach 1226 Grosshandelsring 6**
**D-4500 Osnabrück(DE)**

(54) **Stabhalter für Stabförderbänder.**

(57) Der Halter (3) zum Festlegen von Stäben (2) an Riemen (1) von Stabförderbändern für Hackfruchterntemaschinen besteht aus einem den Stab (2) umschließenden Aufnahmeteil (4) und den Riemen (1) durchgreifenden Verbindungsmitteln. Der Aufnahmeteil (4) bildet dabei eine ringförmige Einzelöse und ist an seiner Unterseite mit zumindest einem zapfenförmigen Verbindungsansatz (5) versehen, dessen Achse (12) die Mittelachse (13) der Öse senkrecht schneidet.

Fig.1

EP 0 212 146 A1

## Stabhalter für Stabförderbänder

Die Erfindung bezieht sich auf einen Halter zum Festlegen von Stäben an Riemen von Stabförderbändern für Hackfruchterntemaschinen gemäß dem Oberbegriff des Anspruchs 1.

Ein bekannter Halter dieser Art hat als Aufnahmeteil ein Ovalrohrstück, das nach Einlegen von zwei Stäben in die Endbereiche seiner Ovalöffnung durch einseitiges Zusammendrücken verformt wird und eine Doppelöse mit einem flachen mittleren Doppelsteg bildet. In dem Doppelsteg werden Querbohrungen angebracht, durch die und durch Öffnungen im Riemen Niete zur Herstellung der Verbindung zwischen dem Aufnahmeteil und dem Riemen gesetzt werden.

Bei einer derartigen Ausführung hebt sich bei Umlaufen von Umlenkrollen der Halter bereichsweise vom Riemen ab. Dies bedingt einen erheblichen Verschleiß und die Gefahr, daß sich zwischen Riemen und Halter im Bereich unterhalb der Stäbe Fremdkörper wie Sand, Erdreich und kleine Steinchen zwischensetzen. Durch dieses Abheben tritt ferner eine Abstandsveränderung zwischen einander zugewandten Stäben benachbarter Halter auf. Die Abmessung des Halters in Laufrichtung des Riemens setzt Riemen mit glatter Oberseite voraus.

Dies gilt auch für einen weiterhin bekannten Halter zur Festlegung eines einzelnen Stabes, der die Grundgestalt einer Halbschelle mit einem den Stab oberseitig übergreifenden Aufnahmeteil und einem sich einseitig an diesen anschließenden Flansch, der mit Bohrungen für eine Vernietung mit dem Riemen versehen ist.

Der Erfindung liegt die Aufgabe zugrunde, einen Halter der im Oberbegriff des Anspruchs 1 angegebenen Art zur Festlegung einzelner Stäbe am Riemen zu schaffen, der bei geringem Platzbedarf gleichbleibende Stababstände auch in Bandumlenkungsbereichen sicherstellt.

Der Halter nach der Erfindung löst die Aufgabe mit den Merkmalen des kennzeichnenden Teils des Anspruchs 1. Hinsichtlich weiterer Ausgestaltungen wird auf den Ansprüche 2 bis 5 verwiesen.

Der Halter nach der Erfindung hat in Riemenlaufrichtung den Durchmesser der Stäbe nur geringfügig überschreitende Abmessungen, so daß er ohne Schwierigkeiten auf Riemen angebracht werden kann, die eine oberseitige Profilierung, z.B. die Stabbefestigung übergreifende Schutzlippen, aufweisen. Da ferner die Befestigungsebene mit der Stabmittelachse zusammenfällt, tritt auch bei Umlaufen von Umlenkrollen kein bereichsweises Abheben des Halters vom Riemen und auch kein Verändern der Stababstände ein.

Weitere Einzelheiten und Vorteile ergeben sich aus der nachfolgenden Beschreibung und der Zeichnung, in der zwei Ausführungsbeispiele des Gegenstands der Erfindung näher veranschaulicht sind. In der Zeichnung zeigen:

Fig. 1 eine perspektivische Teilansicht eines Stabförderbandes im Bereich einer Umlenkrolle,

Fig. 2 u. 3 Querschnitt und Längsschnitt durch den Halter samt Stab und Riemen,

Fig. 4 eine Darstellung ähnlich Fig. 1 mit Haltern abgewandelter Ausführung, und

Fig. 5 u. 6 Schnittdarstellungen durch den abgewandelten Halter ähnlich Fig. 2 und 3.

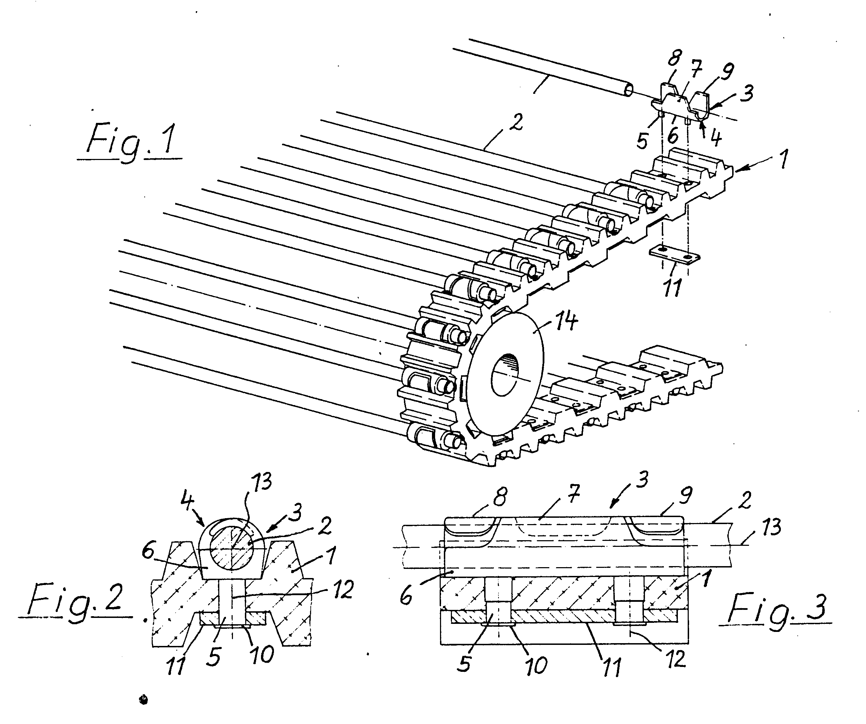

Das in Fig. 1 im Ausschnitt veranschaulichte Stabförderband besteht aus zumindest zwei Riemen 1, von denen lediglich einer sichtbar ist, sowie einer Vielzahl von quer zur Laufrichtung angeordneten Stäben 2, die im allgemeinen einen kreisförmigen Stabquerschnitt besitzen. Der Stababstand richtet sich nach den Aufgaben des Stabförderbandes in Hackfruchterntemaschinen, insbesondere Kartoffelerntemaschinen, wo sie beispielsweise als Siebförderbänder Anwendung finden.

Zur Festlegung der Stäbe an den Riemen 1 ist je Stab und Befestigungsstelle ein Halter 3 vorgesehen, der bei der Ausführung gemäß Fig. 1 bis 3 als einteiliges Formstück, z.B. aus Temperguß, ausgeführt ist.

Der Halter 3 besitzt einen Aufnahmeteil 4 in Gestalt einer den Stab 2 umschließenden ringförmigen Einzelöse und umfaßt zwei an der Unterseite des Aufnahmeteils 4 angeordnete zapfenförmige Verbindungsansätze 5, die als Nietschäfte ausgebildet sind.

Der Aufnahmeteil 4 ist von einer zunächst oben offenen, randseitig mit aufrechtstehenden Wandvorsprüngen 7,8,9 versehenen unteren Halbschale 6 gebildet. Nach Einlegen eines Stabes 2 in die untere Halbschale 6, deren Unterseite eben ausgeführt sein kann, werden die Wandvorsprünge 7,8,9 gegenläufig um den Stab 2 herumgebogen, so daß eine ringförmige Öse entsteht, in der der Stab 2 durch Klemmung sicher festlegbar ist.

Die untere Halbschale 6 weist bevorzugt an ihrem einen Rand einen mittleren Wandvorsprung 7 und an ihrem gegenüberliegenden Rand zwei endseitige Wandvorsprünge 8,9 auf, deren Konturen so gestaltet sind, daß sie sich nach Umformung einander zu einer annähernd geschlossenen oberen Halbschale ergänzen.

Das Umformen bei eingelegtem Stab 2 kann vor oder nach Verbindung des Halters 3 mit dem Riemen 1, z.B. durch ein Formgesenk, erfolgen. Auch die gleichzeitige Ausführung des Umformungs-und des Vernietungsvorganges ist möglich. Die Bildung von Nietköpfen 10 an den Verbindungsansätzen 5 erfolgt nach Anbringung einer Unterlegscheibe 11, die ein Ausreißen der Niete aus dem Riemen 1 verhindert.

Wie insbesondere der Fig. 2 entnommen werden kann, schneidet die Achse 12 der als Nietschäfte ausgebildeten Verbindungsansätze 5 die Mittelachse 13 der Öse und damit die Mittelachse des Stabes 2, so daß bei Durchlaufen von Umlenkungen, z.B. beim Überlaufen von Umlenkrollen 14, keine Veränderungen der Stababstände eintreten. Ferner ist in Verbindung mit der geringen Breite der Halter 3 in Laufrichtung des Riemens 1 ein Abheben des Riemens 1 von gegenüberliegenden Kontaktflächen des Halters 3 vermieden.

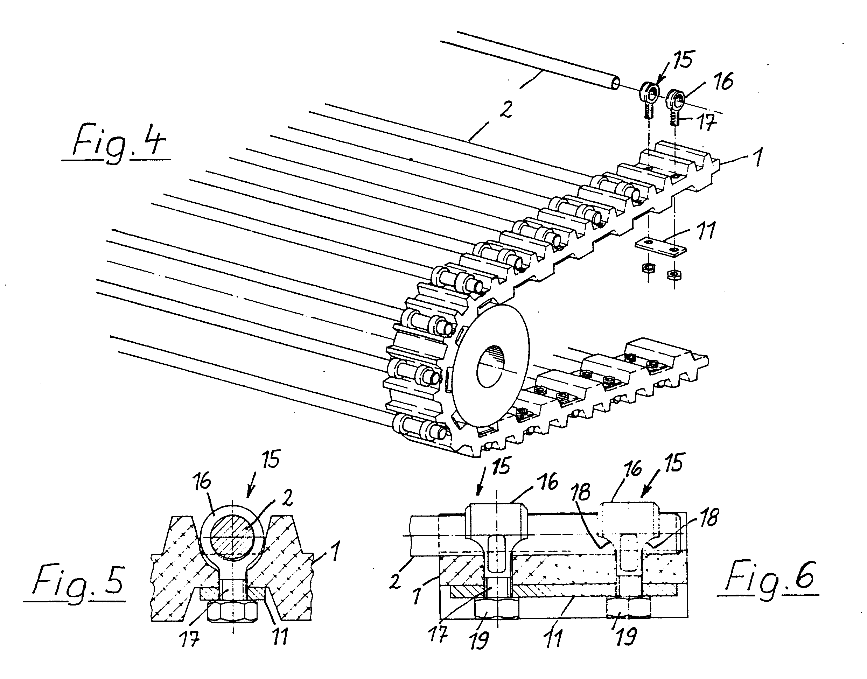

Der Halter 15 gemäß Fig. 4 bis 6 besitzt einen Aufnahmeteil 16 in Gestalt einer geschlossenen Ringöse, die an ihrer Unterseite mit einem Gewindezapfen 17 als Verbindungsansatz versehen ist. Dessen Achse 12 schneidet die Mittelachse 13 der Ringöse 16 unter rechtem Winkel.

Die Ringöse 16 ist in ihrem unteren, in Montagestellung dem Riemen zugewandten Bereich stirnseitig mit Aussparungen 18 versehen, um im Bereich dieser Aussparungen einen unmittelbaren Kontakt zwischen der Oberfläche des Riemens 1 und dem Umfang des Stabes 2 zu ermöglichen.

Die Befestigung eines Stabes 2 im Bereich eines Riemens 1 erfolgt bei der Ausführung nach Fig. 4 bis 6 mit zwei Haltern 15, die parallel im Abstand angeordnet werden. In die Ringösen 16 der Halter 15 wird ein Stab 2 axial eingeschoben, wie dies der Fig. 6 entnehmbar ist, wonach die Halter 15 mit ihren Verbindungsansätzen 17 in Öffnungen im Riemen eingesetzt, die Unterlegplatte 11 auf die benachbarten Verbindungsansätze 17 aufgesetzt und Muttern 19 aufgeschraubt werden. Mit fortschreitendem Aufschrauben der Muttern 19 drücken sich die Ringösen 16 mit ihrem unteren Bereich in die Oberfläche des Riemens 1 ein, bis schließlich auch der Stab 2 eine leichte Einsenkung in die Oberfläche des Riemens 1 erfährt. Hierdurch erfährt der Stab seine axiale Festlegung.

## Ansprüche

1. Halter zum Festlegen von Stäben an Riemen von Stabförderbändern für Hackfruchterntemaschinen, bestehend aus einem den Stab umschließenden Aufnahmeteil und den Riemen durchgreifenden Verbindungsmitteln, dadurch gekennzeichnet, daß der Aufnahmeteil (4;16) eine ringförmige Einzelöse bildet und an seiner Unterseite mit zumindest einem zapfenförmigen Verbindungsansatz (5;17) versehen ist, dessen Achse - (12) die Mittelachse (13) der Öse senkrecht - schneidet.

2. Halter nach Anspruch 1, dadurch gekennzeichnet, daß der Aufnahmeteil (16) als geschlossene, in ihrer unteren Hälfte in Teilbereichen (18) ausgenommene Ringöse und der Verbindungsansatz (17) als Gewindezapfen ausgebildet ist.

3. Halter nach Anspruch 1, dadurch gekennzeichnet, daß der Aufnahmeteil (4) von einer randseitig mit aufrechtstehenden Wandvorsprüngen - (7,8,9) versehenen unteren Halbschale (6) gebildet und durch gegenläufiges Umbiegen der Wandvorsprünge zur Öse verformbar ist.

4. Halter nach Anspruch 3, dadurch gekennzeichnet, daß die Halbschale (6) an ihrem einen Rand einen mittleren (7) und an ihrem gegenüberliegenden Rand zwei endseitige Wandvorsprünge (8,9) aufweist, die sich nach Umformung einander zu einer annähernd geschlossenen oberen Halbschale ergänzen.

5. Halter nach Anspruch 3 oder 4, dadurch gekennzeichnet, daß der Aufnahmeteil (4) an seiner Unterseite mit zwei als Nietschäfte ausgebildeten Verbindungsansätzen (5) versehen ist.

Fig.1

Fig.2

Fig.3

Fig.4

15

16

17

2

1

11

0 212 146

15

16

2

1

Fig.5

17

11

15

16

18

16

15

18

2

1

17

19

11

19

Fig.6

| | **EINSCHLÄGIGE DOKUMENTE** | | EP 86108713.8 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
| A | DD - A - 88 858 (J.BRÄUNIGER,G. BOHNER, G.HAARE, P.BRODA)<br><br>  * Anspruch 1; Fig. 4,5 *<br><br>-- | 1 | A 01 D 17/10<br>B 65 G 17/42<br>A 01 D 33/00 |
| A | DE - B - 1 033 130 (HEINRICH FRICKE)<br><br>  * Ansprüche 1,2; Fig. 3 *<br><br>-- | 1,3 | |
| A | DD - A - 208 528 (H.SCHACHT, W. HAENDLER, R.DECKERT, R.HELMBOLD)<br><br>  * Anspruch 1; Fig. 3 *<br><br>-- | 1 | |
| A | CH - A - 628 776 (FRANZ GRIMME LANDMASCHINENFABRIK)<br><br>-- | 1 | |
| A | DE - C - 818 925 (S.LIPPOLD, K. BAßE)<br><br>-- | | RECHERCHIERTE SACHGEBIETE (Int. Cl.4) |
| A | DE - B - 1 101 274 (HANS HOLGER)<br><br>-- | | A 01 D 17/00<br>A 01 D 33/00 |
| A | GB - A - 1 406 220 (JAMES MACKIE)<br><br>  * Fig. 1 *<br><br>-- | 1,2 | B 65 G 17/06 |
| A | AT - B - 346 767 (STEIRISCHE KETTENFABRIKEN)<br><br>  * Fig. 1; Seite 3, Zeilen 8,9 *<br><br>---- | 1,2 | |

Der vorliegende Recherchenbericht wurde für alle Patentansprüche erstellt.

| Recherchenort | Abschlußdatum der Recherche | Prüfer |
|---|---|---|
| WIEN | 23-09-1986 | MENTLER |